# EUROPÄISCHE PATENTSCHRIFT

(11) **EP 1 620 337 B1**
(45) Veröffentlichungstag und Bekanntmachung des Hinweises auf die Patenterteilung: **02.11.2006**
(21) Anmeldenummer: 04725000.6
(22) Anmeldetag: 01.04.2004
(51) Int. Cl.: B65G 47/51

(54) **VORRICHTUNG ZUM PALETTIEREN**
PALLETIZING DEVICE
DISPOSITIF DE PALETTISATION

(30) Priorität: 06.05.2003 DE 10320321
(43) Veröffentlichungstag der Anmeldung: 01.02.2006
(73) Patentinhaber: KRONES AG, 93073 Neutraubling (DE)
(72) Erfinder: HAUPT, Johann, 85356 Freising (DE)
(86) Internationale Anmeldenummer: PCT/EP2004/003435
(87) Internationale Veröffentlichungsnummer: WO 2004/099046

(56) Entgegenhaltungen:
- EP-B- 1 073 598
- DE-U- 7 541 251

## Beschreibung

Die Erfindung bezieht sich auf eine Vorrichtung zum Palettieren der im Oberbegriff von Anspruch 1 erläuterten Art.

Eine derartige Vorrichtung ist beispielsweise aus der EP 1 073 598 bekannt. Die bekannte Fördervorrichtung enthält eine Förderstrecke für zu palettierende Gegenstände, die von einer Anliefereinrichtung zu einem Palettenbelader führt. Die bekannte Fördervorrichtung ist zum Fördern von leeren Flaschen ausgebildet. Die Flaschen werden von einem Flaschenerzeuger in eine Sammel- und Umsetzeinrichtung gefördert, wo sie gruppiert und als Gruppe in einem Zwischenträger untergebracht werden. Die mit Flaschen gefüllten Zwischenträger gelangen dann über eine Förderstrecke zum Palettenbelader, wo sie, mit oder ohne Zwischenträger, lagenweise auf einer Palette gestapelt werden. Zwischen der Sammel- und Umsetzeinrichtung und dem Palettenbelader befinden sich Eingaben und Ausgaben, die in ein Zwischenlager für beladene Zwischenträger führen. Das Zwischenlager ist mit einem Regalförderzeug versehen, das die beladenen Zwischenträger in das Regallager verbringt und zum Wiedereinschleusen in die Förderstrecke aus dem Regallager holt. Eine solche Fördervorrichtung ist relativ kompliziert und rentiert sich nur dort, wo große Mengen an Gegenständen zwischengelagert werden müssen.

Eine Fördervorrichtung mit einem ähnlichen Zwischenlager ist aus dem DE-U-299 13 237 bekannt. Das Zwischenlager dieser Fördervorrichtung wird einerseits durch eine entsprechend dimensionierte Gruppiereinrichtung zum Zusammenstellen von Gegenständen zu Gruppen und zum Ansammeln dieser Gruppen auf Zwischenträgern oder Trays gebildet. Zum anderen ist ein weiteres Lager mit größerer Kapazität vorgesehen, das von der Gruppiereinrichtung beschickt wird. Das Ein- und Ausschleusen von Gegenständen erfolgt an unterschiedlichen Abzweigstellen der Förderstrecke, die bis zur Palettiereinrichtung durchläuft.

Schließlich zeigt die DE-A-32 35 223 eine Vorrichtung zum Transportieren von Gegenständen, beispielsweise von Flaschenkästen, durch Behandlungsstationen, zwischen denen an unterschiedlichen Stellen in der Förderstrecke Puffermagazine vorgesehen sind, in denen die Gegenstände, meist in Zwischenträgern aufgenommen, aus der Förderstrecke heraus nach oben angehoben werden, so dass nachfolgende Zwischenträger bzw. Gegenstände durchlaufen können. Das letzte Puffermagazin befindet sich in der Anlieferungsstrecke, wobei keine Gruppiereinrichtung vorgesehen ist.

Der Erfindung liegt die Aufgabe zugrunde, eine Vorrichtung zum Palettieren von Gegenständen zu schaffen, die mit einer konstruktiv einfachen und unmittelbar wirksamen Puffereinrichtung versehen ist.

Die Aufgabe wird durch die im Anspruch 1 angegebenen Merkmale gelöst.

Durch die erfindungsgemäße Ausgestaltung ist die Puffereinrichtung in der Lage, unmittelbar auf die Gegenstände einzuwirken und diese zeitweilig aus der Förderstrecke herauszubewegen, um beispielsweise eine volle gegen eine leere Palette austauschen zu können. Da jeweils wenigstens ein Aufnahmeplatz der Puffereinrichtung Teil der Förderstrecke ist, können die Gegenstände ohne Zeitverzögerung aus dem Förderweg bewegt werden.

Vorteilhafte Weiterbildungen sind den Unteransprüchen zu entnehmen.

Die Reaktionszeit für die Puffereinrichtung wird noch weiter verbessert, wenn die Puffereinrichtung gemäß Anspruch 2 zwischen dem Ende der Anliefereinrichtung und dem Palettenbelader, d.h. an derjenigen Stelle, an der die Gegenstände von der Anliefereinrichtung auf den Palettenbelader übergeben werden, angeordnet wird.

Eine besonders einfache Puffereinrichtung weist die Merkmale gemäß den Ansprüchen 3 oder 4 auf.

Die Förderung im Bereich der Puffereinrichtung erfolgt bevorzugt gemäß Anspruch 5 durch Schieben mit Hilfe der in den Ansprüchen 6 oder 7 beschriebenen Schieber.

Ist gemäß Anspruch 8 eine Gruppiervorrichtung vorgesehen, so befindet sich die Puffereinrichtung bevorzugt zwischen der Gruppiereinrichtung und dem Palettenbelader, so dass die Reaktionszeit so kurz wie möglich ist.

Vorteilhafte konstruktive Ausgestaltungen sind den Ansprüchen 10 und 11 zu entnehmen.

Ein Ausführungsbeispiel der Erfindung wird nachfolgend anhand der Zeichnungen näher erläutert. Es zeigen:
- Fig. 1: eine erfindungsgemäße Vorrichtung zum Palettieren in stark schematisierter Darstellung, und

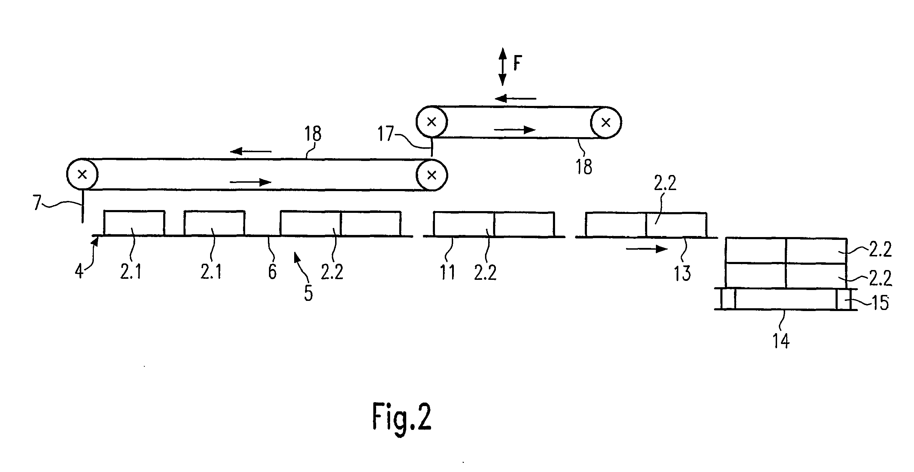

- Fig. 2: die Seitenansicht der Vorrichtung gemäß Fig. 1 in stark schematisierter Darstellung.

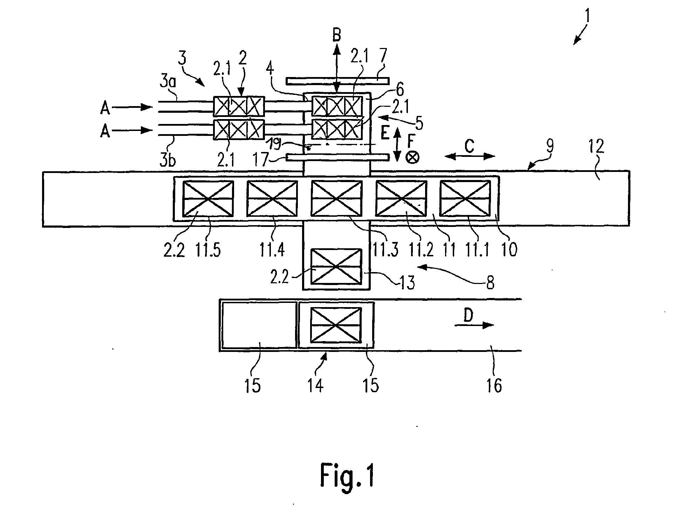

Fig. 1 zeigt in Draufsicht und in stark schematisierter Darstellung eine Vorrichtung 1 zum Palettieren von Gegenständen 2, die an irgendeiner Stelle eines überwiegend automatischen Bearbeitungsablaufes der Gegenstände 2 angeordnet ist. Bevorzugt wird die Vorrichtung 1 in Befüll- und verpackungsanlagen für Getränke eingesetzt. Die Vorrichtung 1 ist jedoch überall dort einsetzbar, wo Gegenstände 2 palettiert werden müssen. Als Gegenstände 2 können Einzelobjekte oder bereits gruppierte und zu Gebinden zusammengefasste Einzelobjekte, mit oder ohne Zwischenträger oder dgl., d.h. beispielsweise Getränke-Sammelpackungen, Trays, Schrumpfpackungen, gefüllte Flaschenkästen usw. gehandhabt werden. Im dargestellten Ausführungsbeispiel sind die Gegenstände 2 vorgruppierte und in einem Zwischenträger zusammengefasste Sammelpackungen 2.1 von Getränkebehältern. Die einzelnen Sammelpackungen 2.1 werden von einer Anlieferungseinrichtung 3 an die Palettiervorrichtung 1 herangeführt. Die Anlieferungseinrichtung 3 enthält im dargestellten Ausführungsbeispiel zwei Förderer 3a und 3b, die im Bereich der Palettiervorrichtung 1 parallel laufend angeordnet sind. Die Förderer 3a, 3b können jede zum Fördern der speziellen Gegenstände 2.1 geeignete Fördereinrichtungen sein, sind jedoch bevorzugt Fördereinrichtungen für eine liegende oder stehende Förderung. Durch die Anliefereinrichtung 3 werden die Sammelpackungen 2.1 in Richtung der Pfeile A bis in einen Endbereich 4 der Anliefereinrichtung 3 gefördert.

Die Anliefereinrichtung 3 enthält im Anschluss an den Endbereich 4 der Förderer 3a, 3b eine Gruppiereinrichtung 5, die im dargestellten Ausführungsbeispiel einen Förderer 6 aufweist, der im dargestellten Ausführungsbeispiel durch zwei Rollbahnen gebildet ist, auf den die Förderer 3a, 3b der Anliefereinrichtung 3 die Sammelpackungen 2.1 transportieren. Die Sammelpackungen 2.1 werden so zugeführt, dass sich jeweils mehrere der Sammelpackungen 2.1 auf dem Träger 6 befinden.

Dann tritt ein Schieber 7, der in Richtung des Pfeiles B quer zur Anlieferrichtung A hin- und herbewegbar ist, in Aktion und schiebt die gruppierten Sammelpackungen 2.1 vom Endbereich 4 der Förderer 3a, 3b weg in Richtung auf einen Palettenbelader 8. Dabei werden die Gegenstände 2, d.h. die Sammelpackungen 2.1 in unmittelbare Berührung miteinander geschoben, so dass aus den Sammelpackungen 2.1 nach und nach eine palettierfähige Lage 2.2 gebildet wird. Auf dem verschiebeweg zwischen dem Endbereich 4 bzw. der Gruppiereinrichtung 5 und dem Palettenbelader 8 werden die Lagen 2.2 über einen Lagenvorbereitungsplatz 19 und eine Puffereinrichtung 9 geschoben, wobei die Länge des Förderers 6 zwischen dem Endbereich 4 und der Puffereinrichtung 9 so bemessen ist, dass er mehrere Sammelpackungen 2.1 sowie gegebenenfalls eine Lage 2.2 aufnehmen kann.

Die Puffereinrichtung 9 enthält einen Wagen 10 mit einer Aufnahmefläche 11, die in einer horizontalen Ebene fluchtend mit dem Förderer 6 und dem Lagenvorbereitungsplatz 19 ausgerichtet ist und sich im Wesentlichen ohne Spalt an den Förderer 6 anschließt. Auf der Aufnahmefläche 11 sind eine Vielzahl von Aufnahmeplätzen 11.1, 11.2, 11.3, 11.4 und 11.5 vorgesehen, die direkt als Aufnahmemulden oder dgl. ausgebildet sein können, jedoch bevorzugt durch eine ein Vielfaches der Breite der Lagen 2.2 betragende Länge der Aufnahmefläche 11 gebildet werden. Im dargestellten Ausführungsbeispiel sind fünf Aufnahmeplätze vorgesehen, die alle jeweils mit einer Lage 2.2 der Gegenstände 2 besetzt sind.

Der Wagen 10 ist in einer Führung 12 in Richtung des Pfeiles C quer zur Förderrichtung B hin- und herbewegbar und so angeordnet, dass immer einer der Aufnahmeplätze 11.1 bis 11.5 sich in fluchtender Ausrichtung mit dem Förderer 6 befindet. Im dargestellten Ausführungsbeispiel ist dies der Aufnahmeplatz 11.3.

Die Aufnahmefläche 11 steht weiterhin in horizontal fluchtender Ausrichtung mit einem weiteren Träger 13, der dem Palettenbelader 8 zugeordnet ist und bevorzugt als Abnahmestation des Palettenbeladers dient und beispielsweise als Beladeplatte oder Rollenteppich oder dgl. ausgebildet ist und relativ zu einem Palettenstandplatz 14 in Vertikalrichtung und ggf. Horizontalrichtung bewegbar ist, um die einzelnen Lagen 2.2 übereinander auf einer Palette 15 zu stapeln. Bevorzugt ist der Palettenstandplatz 14 an einem Förderer 16 vorgesehen, der leere Paletten 15 an den Palettenstandplatz 14 heran und gefüllte Paletten 15 in Richtung des Pfeiles D vom Palettenstandplatz 14 wegfördert.

Für die Übergabe vom Förderer 6 im Bereich der Gruppiereinrichtung 5 auf den Träger 13 des Palettenbeladers 8 über die Aufnahmefläche 11 ist ein weiterer Schieber 17 vorgesehen, der in Richtung des Pfeiles E parallel zur Richtung B horizontal hin- und herbewegbar sowie in Richtung des Pfeiles F vertikal anheb- und absenkbar ist und mit dem Schieber 7 überlappend arbeitet, so dass sich beide nicht behindern. Beide Schieber 7, 17 sind auf herkömmliche Weise ausgebildet, d.h. sie sind bevorzugt an einem Fördermittel 18 befestigt, das in vorbestimmter Weise steuerbar ist.

Nachfolgend soll der Betrieb der erfindungsgemäßen Palettiervorrichtung 1 erläutert werden. Die auf den Förderern 3a und 3b ankommenden Gegenstände 2, in diesem Falle Sammelverpackungen 2.1 gelangen am Ende 4 der Förderer 3a, 3b auf den Förderer 6 der Gruppiereinrichtung 5 und werden dort durch entsprechende Anschläge gehalten. Dann werden die Sammelverpackungen 2.1 durch den Schieber 7 in engen Kontakt miteinander geschoben und nach und nach zu einer palettierfähigen Lage 2.2 zusammengestellt und als palettierfähige Lage 2.2 vom Förderer 6 über den Lagenvorbereitungsplatz 19 auf die Aufnahmefläche 11 geschoben. Steht im Palettenbelader 8 eine noch nicht vollständig beladene Palette 15 auf dem Palettenstandplatz 14, so tritt unmittelbar anschließend der Schieber 17 in Aktion und schiebt die Lage 2.2 von der Aufnahmefläche 11 auf den Beladeträger 13, der die Lage 2.2 anschließend in üblicher Weise auf der Palette 15 stapelt.

Ist eine Palette 15 gefüllt, so wird eine gewisse Zeit benötigt, diese vom Palettenstandplatz 14 zu entfernen und durch eine leere Palette 15 zu ersetzen. Während dieser Zeit musste bisher die Anlieferung gestoppt werden. Erfindungsgemäß wird dies vermieden, indem der Wagen 10 entlang des Pfeiles C verschoben wird, bis jeweils ein leerer Aufnahmeplatz mit dem Lagenvorbereitungsplatz 19 und dem Beladeträger 13 ausgerichtet ist. Diese nimmt dann die fertiggestellte Lage 2.2 auf, die vom Schieber 7 auf die Aufnahmefläche 11 geschoben wurde, wobei der Schieber 17 außer Betrieb ist. Dies kann solange fortgeführt werden, bis alle Aufnahmeplätze 11.1 bis 11.5 auf der Aufnahmefläche 11 des Wagens 10 besetzt sind. Dies gestattet einen Palettenwechsel, ohne dass die Anlieferung und die vorgeschalteten Mschinen gestoppt werden müssen. Durch die beiden Schieber 7, 17, die sich die Förderung zwischen dem Ende 4 und dem Palettenbelader 8 teilen, ist es weiterhin möglich, den Wagen 10 während des Beladens der nächsten Palette 15 zu leeren, indem man den Schieber 17 mit höherer Geschwindigkeit als den Schieber 7 und somit die Förderer 3a, 3b laufen lässt. Dadurch ist es möglich, den Wagen 10 der Puffereinrichtung 9 zu entladen bevor der nächste Palettenwechsel stattfindet. Da weiterhin die Förderstrecke zwischen dem Ende 4 und dem Palettenbelader 8 immer über die Aufnahmefläche 11 verläuft, sind zeitaufwendige Ein- bzw. Ausschleusvorgänge nicht notwendig.

In Abwandlung des beschriebenen und gezeichneten Ausführungsbeispiels kann die Gruppereinrichtung entfallen, wenn bereits palettierfähige Lagen angeliefert werden. Die Puffereinrichtung 9 kann statt des in Horizontalrichtung bewegbaren Wagens einen in Vertikalrichtung bewegbaren Wagen bzw. ein schrittweise an- und abschaltbares Förderband enthalten. Die Anliefereinrichtung kann weiterhin nur einen einzigen Förderer oder mehr als zwei Förderer aufweisen. Die Palettiervorrichtung kann weiterhin auch mit zwei oder mehreren Palettenplätzen ausgestattet sein.

## Patentansprüche

1. Vorrichtung zum Palettieren von Gegenständen, mit einer Puffereinrichtung und einer Förderstrecke, in der eine Anliefereinrichtung für die Gegenstände und ein Palettenbelader angeordnet sind, **dadurch gekennzeichnet, dass** die Puffereinrichtung (9) eine Vielzahl von Aufnahmeplätzen (11.1 bis 11.5) für die Gegenstände (2) enthält, die in und aus der Förderstrecke bewegbar sind, wobei sich jeweils einer der Aufnahmeplätze (11.1 bis 11.5) in der Förderstrecke befindet und als Teil der Förderstrecke ausgebildet ist.

2. Vorrichtung nach Anspruch 1, **dadurch gekennzeichnet, dass** die Puffereinrichtung (9) zwischen einem Endbereich (4) der Anliefereinrichtung (3) und dem Palettenbelader (8) angeordnet ist.

3. Vorrichtung nach Anspruch 1 oder 2, **dadurch gekennzeichnet, dass** die Puffereinrichtung (9) eine quer zur Förderstrecke bewegbare Aufnahmefläche (11) enthält, auf der die Aufnahmeplätze (11.1 bis 11.5) ausgebildet sind.

4. Vorrichtung nach Anspruch 3, **dadurch gekennzeichnet, dass** die Aufnahmefläche auf einem verfahrbaren Wagen (10) vorgesehen ist.

5. Vorrichtung nach einem der Ansprüche 1 bis 4, **dadurch gekennzeichnet, dass** die Förderstrecke im Bereich der Puffereinrichtung (9) als Verschiebestrecke für die Gegenstände (2) ausgebildet ist.

6. Vorrichtung nach Anspruch 5, **dadurch gekennzeichnet, dass** die Förderstrecke zwischen der Anlieferungseinrichtung (3) und dem Palettenbelader (8) wenigstens einen Schieber (7) zum Verschieben der Gegenstände (2) von der Anliefereinrichtung (3) auf den Aufnahmeplatz (11.1 bis 11.5) enthält.

7. Vorrichtung nach Anspruch 5 oder 6, **dadurch gekennzeichnet, dass** die Förderstrecke zwischen der Anliefereinrichtung (3) und dem Palettenbelader (8) wenigstens einen Schieber (17) zum Verschieben der Gegenstände vom Aufnahmeplatz (11.1 bis 11.5) zum Palettenbelader (8) enthält.

8. Vorrichtung nach einem der Ansprüche 1 bis 7, **dadurch gekennzeichnet, dass** die Anliefereinrichtung (3) eine an ihrem Endbereich (4) angeordnete Gruppiereinrichtung (5) zum Zusammenstellen palettierfähiger Lagen (2.2) aufweisen.

9. Vorrichtung nach Anspruch 8, **dadurch gekennzeichnet, dass** die Puffereinrichtung (9) zwischen der Gruppereinrichtung (5) und dem Palettenbelader (8) angeordnet ist.

10. Vorrichtung nach Anspruch 5 und 8, **dadurch gekennzeichnet, dass** zwischen der Gruppiereinrichtung (5) und dem Ablageplatz (11.1 bis 11.5) ein erster Schieber (7) und zwischen dem Ablageplatz (11.1 bis 11.5) und dem Palettenbelader (8) ein zweiter Schieber (17) vorgesehen ist.

11. Vorrichtung nach Anspruch 10, **dadurch gekennzeichnet, dass** der zweite Schieber (17) heb- und senkbar ist.

## Claims

1. Device for palletising objects, having a buffer apparatus and a conveying path in which a delivery apparatus for the objects and a pallet loader are arranged, **characterised in that** the buffer apparatus (9) comprises a plurality of receiving sites (11.1 to 11.5) for the objects (2), which are movable in and out of the conveying path, wherein, in each case, one of the receiving sites (11.1 to 11.5) is situated in the conveying path and is designed as part of the conveying path.

2. Device according to claim 1, **characterised in that** the buffer apparatus (9) is arranged between an end region (4) of the delivery apparatus (3) and the pallet loader (8).

3. Device according to claim 1 or 2, **characterised in that** the buffer apparatus (9) comprises a receiving surface (11) movable transversely to the conveying path, on which receiving surface the receiving sites (11.1 to 11.5) are formed.

4. Device according to claim 3, **characterised in that** the receiving surface is provided on a movable carriage (10).

5. Device according to one of the claims 1 to 4, **characterised in that** the conveying path is designed in the region of the buffer apparatus (9) as a sliding path for the objects (2).

6. Device according to claim 5, **characterised in that** the conveying path between the delivery apparatus (3) and the pallet loader (8) has at least one slider (7) for displacing the objects (2) from the delivery apparatus (3) onto the receiving site (11.1 to 11.5).

7. Device according to claim 5 or 6, **characterised in that** the conveying path between the delivery apparatus (3) and the pallet loader (8) has at least one slider (17) for displacing the objects from the receiving site (11.1 to 11.5) to the pallet loader (8).

8. Device according to one of the claims 1 to 7, **characterised in that** the delivery apparatus (3) has a grouping apparatus (5) arranged at its end region (4) for collecting palletisable layers (2.2).

9. Device according to claim 8, **characterised in that** the buffer apparatus (9) is arranged between the grouping apparatus (5) and the pallet loader (8).

10. Device according to claim 5 and 8, **characterised in that** between the grouping apparatus (5) and the placement site (11.1 to 11.5), a first slider (7) and between the placement site (11.1 to 11.5) and the pallet loader (8), a second slider (17) is provided.

11. Device according to claim 10, **characterised in that** the second slider (17) can be raised and lowered.

## Revendications

1. Dispositif de palettisation d'objets encombrants, avec un dispositif tampon et une voie de transport, dans lequel sont disposés un système de livraison pour les objets et un chariot dépalettiseur,
**caractérisé en ce que**
le dispositif tampon (9) contient de multiples lieux de réception (11.1 à 11.5) pour les objets encombrants (2) qui peuvent être déplacés dans et hors de la voie de transport, chacun des lieux de réception (11.1 à 11.5) se trouvant dans la voie de transport et étant formé en tant que partie de la voie de transport.

2. Dispositif selon la revendication 1,
**caractérisé en ce que**
le dispositif tampon (9) est disposé entre une extrémité (4) du système de livraison (3) et le chariot dépalettiseur (8).

3. Dispositif selon la revendication 1 ou 2,
**caractérisé en ce que**
le dispositif tampon (9) contient une surface de réception (11) mobile transversalement à la voie de transport, sur laquelle les lieux de réception (11.1 à 11.5) sont formés.

4. Dispositif selon la revendication 3,
**caractérisé en ce que**
la surface de réception est prévue sur un chariot mobile (10).

5. Dispositif selon l'une quelconque des revendications 1 à 4,
**caractérisé en ce que**
la voie de transport est formée dans la zone du dispositif tampon (9) en tant que voie de déplacement pour les objets encombrants (2).

6. Dispositif selon la revendication 5,
**caractérisé en ce que**
la voie de transport entre le système de livraison (3) et le chariot dépalettiseur (8) contient au moins une coulisse (7) pour déplacer les objets (2) du système de livraison (3) au lieu de réception (11.1 à 11.5).

7. Dispositif selon la revendication 5 ou 6,
**caractérisé en ce que**
la voie de transport entre l'installation de livraison (3) et le chariot dépalettiseur (8) contient au moins un tiroir (17) pour déplacer les objets du lieu de réception (11.1 à 11.5) au chariot dépalettiseur (8).

8. Dispositif selon l'une des revendications 1 à 7,
**caractérisé en ce que**
l'installation de livraison (3) présente une installation de groupement (5) agencée à son extrémité (4) pour grouper les couches (2.2) pouvant être palettisées.

9. Dispositif selon la revendication 8,
**caractérisé en ce que**
le dispositif tampon (9) est disposé entre l'installation de groupement (5) et le chariot dépalettiseur (8).

10. Dispositif selon la revendication 5 et 8,
**caractérisé en ce qu'**
une première coulisse (7) est prévue entre l'installation de groupement (5) et le lieu de dépôt (11.1 à 11.5) et une seconde coulisse (17) entre le lieu de dépôt (11.1 à 11.5) et le chariot dépalettiseur (8).

11. Dispositif selon la revendication 10,
**caractérisé en ce que**
la seconde coulisse (17) peut être élevée et abaissée.
